**Europäisches Patentamt**

**European Patent Office**

**Office européen des brevets**

(19)

(11) Veröffentlichungsnummer: **0 155 578**
**B1**

(12) **EUROPÄISCHE PATENTSCHRIFT**

(45) Veröffentlichungstag der Patentschrift: **13.06.90**

(51) Int. Cl.⁵: **B 01 D 3/00**

(21) Anmeldenummer: **85102381.2**

(22) Anmeldetag: **02.03.85**

(54) **Verfahren und Vorrichtung zur Rektifikation und/oder Strippung.**

(30) Priorität: **07.03.84 DE 3408364**
**01.10.84 DE 3436021**

(43) Veröffentlichungstag der Anmeldung:
**25.09.85 Patentblatt 85/39**

(45) Bekanntmachung des Hinweises auf die
Patenterteilung:
**13.06.90 Patentblatt 90/24**

(84) Benannte Vertragsstaaten:
**AT BE DE FR GB IT NL**

(56) Entgegenhaltungen:
**WO-A-82/01323**
**DE-A-2 419 723**
**DE-B-2 507 209**
**DE-C-1 087 113**
**GB-A-1 452 377**

(73) Patentinhaber: **Linde Aktiengesellschaft**
**Abraham-Lincoln-Strasse 21**
**D-6200 Wiesbaden (DE)**

(72) Erfinder: **Becker, Hans, Dr. Dipl.-Ing.**
**Zwengauer Weg 9**
**D-8000 München 71 (DE)**
Erfinder: **Linde, Gerhard, Dr. Dipl.-Phys.**
**Eichleite 50**
**D-8022 Grünwald (DE)**

(74) Vertreter: **Schaefer, Gerhard, Dr.**
**Linde Aktiengesellschaft Zentrale**
**Patentabteilung**
**D-8023 Höllriegelskreuth (DE)**

Courier Press, Leamington Spa, England.

### Beschreibung

Die Erfindung betrifft ein Verfahren und eine Vorrichtung zur Rektifikation und/oder Strippung in einer Kolonne, deren unterer Teil beheizt und deren oberer Teil gekühlt wird, wobei Heizung und Kühlung durch eine Wärmepumpe miteinander verkoppelt sind.

Durch Einblasen eines Fremdgases oder -dampfes in eine Kolonne wird bekanntermaßen der Partialdruck innerhalb der Kolonne gesenkt und gleichzeitig die Temperatur in der Kolonne erniedrigt. Dieser Effekt wird sowohl zur schonenden Stofftrennung—Rektifikation—als auch zur Regenerierung durch Strippen eines Waschmittels bei vielen chemischen und physikalischen Wäschen eingesetzt. Mit besonderem Vorteil kann hierbei Wasserdampf angewendet werden. Dieser wird bei der Destillation oder dem Strippen entweder direkt in dem Sumpf der Kolonne eingeblasen oder er kann, falls die Zuspeisung der Kolonne bereits Wasser enthält, durch externe Beheizung des Kolonnensumpfes erzeugt werden. Gelegentlich werden auch beide Möglichkeiten kombiniert. In bekannter Weise lassen sich dabei Sumpfheizung und Kopfkühlung der Kolonne über eine Wärmepumpe miteinander verkoppeln.

Aus der DE—A—2,419,723 ist ein Verfahren sowie eine Vorrichtung mit einer Kolonne bekannt wobei sich an der Kolonne die Kopfkühlung und ein das Sumpfprodukt verdampfender Verdampfer befinden, die mit einer Wärmepumpe gekoppelt sind.

Der Erfindung liegt daher die Aufgabe zugrunde, ein Verfahren der eingangs genannten Art so auszugestalten, daß der Energieeinsatz verringert werden kann.

Diese Aufgabe wird erfindungsgemäß dadurch gelöst, daß die Wärmepumpe durch arbeitsleistende Entspannung eines Gases oder Dampfes angetrieben wird und daß das Gas oder der Dampf nach der Entspannung als Strippgas in der Kolonne verwendet wird.

Bei den Destillationsverfahren setzt sich der Wärmebedarf im Sumpf der Kolonne prinzipiell aus drei Komponenten zusammen, nämlich Anwärmung der Flüssigkeit auf Sumpftemperatur, Energiezufuhr zur Stofftrennung und Erzeugung des Strippdampfes. Demgegenüber wird gemäß der Erfindung im Prinzip eine Wärmepumpe zwischen Kolonnenkopf und Sumpf eingesetzt, der Antrieb der Wärmepumpe durch arbeitsleistende Entspannung bewirkt und das Gas oder der Dampf nach der arbeitsleistenden Entspannung als Strippgas in der Kolonne verwendet. Mit diesen Maßnahmen wird eine erhebliche Reduzierung des Energieeinsatzes erzielt.

Als besonders zweckmäßig hat es sich dabei erwiesen, zum Antrieb der Wärmepumpe durch arbeitsleistende Entspannung Wasserdampf zu verwenden. Dieser eignet sich häufig als Strippgas in der Kolonne.

Nach einer weiteren Ausführungsform des erfindungsgemäßen Verfahrens ist vorgesehen, daß die Wärmepumpe als geschlossenes System mit eigenem Arbeitsmedium betrieben wird. Als Arbeitsmedium kommt dabei beispielsweise das Kältemittel R 11 in Betracht. Alternativ besteht aber auch die Möglichkeit, die Wärmepumpe als offenes System zu betreiben und als Arbeitsmedium das den Kolonnenkopf oder Kopfkondensator verlassende Gas zu verwenden. Mit dieser Verfahrensführung wird somit die sogenannte Brüdenkompression ausgeführt. In bekannter Weise kann die Verdichtung der Brüden sowohl durch einen Verdichter als auch durch einen Ejektor erfolgen. Im ersteren Fall wird der Verdichter durch eine Expansionsturbine angetrieben, deren Auspuff in den Sumpf der Kolonne geleitet und somit als Strippgas verwendet wird, während die verdichteten Brüden den Sumpf über einen Wärmetauscher beheizen. Im letzteren Fall ist es zweckmäßig, wenn ein Teil des in der Kopfkühlung kondensierten Dampfes abgezogen, entspannt und unter Verdampfung zur Kühlung des Kolonnenkopfes verwendet wird. Nach der Verdichtung durch den Ejektor werden die Brüden zusammen mit dem Treibgas des Ejektors dem Kolonnensumpf zugeführt und als Strippgas verwendet.

Mit dieser Verfahrensführung der Dampfstrahl-Brüdenverdichtung kann eine wesentliche Verringerung des Dampfverbrauches erreicht werden, was sich insbesondere durch eine Reduzierung der Investitionskosten bemerkbar macht.

Gemäß einer weiteren Variante des erfindungsgemäßen Verfahrens ist überdies vorgesehen, daß der Wärmepumpe zusätzlich Wärme aus dem Sumpfprodukt zugeführt und dieses hierdurch gekühlt wird. Diese Maßnahme kommt insbesondere dann zum Tragen, wenn das Sumpfprodukt vor der Abgabe weiter abgekühlt werden soll.

Eine weitere Senkung des Energiebedarfes kann erreicht werden durch einen stufenweisen Einsatz der Wärmepumpe. Hierbei kann die Kühlung und/oder Heizung der Kolonne in mehreren Stufen ausgeführt werden, d.h. die Wärmepumpe gibt auf mehreren Temperaturniveaus Wärme ab oder nimmt sie auf.

Die Erfindung betrifft überdies eine Vorrichtung zur Durchführung des Verfahrens mit einer Kolonne, Sumpfheizung und Kopfkühlung, die über eine Wärmepumpe miteinander gekoppelt sind. Diese Vorrichtung ist erfindungsgemäß dadurch gekennzeichnet, daß die Wärmepumpe mit einer Entspannungseinrichtung verbunden ist sowie daß die Ausgangsseite der Entspannungseinrichtung mittels einer Leitung mit dem Sumpf der Kolonne verbunden ist.

Insbesondere kann dabei die Wärmepumpe als geschlossenes System oder alternativ als offenes System ausgebildet sein, wobei im letzteren Fall die Wärmepumpe über eine Leitung mit dem Kopf der Kolonne oder dem Kopfkondensator verbunden ist. Bevorzugt ist die Entspannungseinrichtung als Expansionsturbine ausgebildet und über eine Auspuffleitung an den unteren Teil der Kolonne angeschlossen. Insbesondere bei einem offenen System kann die Entspannungseinrichtung auch als Ejektor ausgebildet sein. Weiterhin ist es von Vorteil, wenn unterhalb der Kopfkühlung die Kolonne mit einer Flüssigkeitssperre versehen ist. Zusätzlich kann die Wärmepumpe bei Verwendung eines geschlossenen Systems mit der Produktleitung für das Sumpfprodukt verbunden sein.

Die erfindungsgemäße Verfahrensweise sowie die Vorrichtung können mit Vorteil bei der Regenerierung von Waschmitteln physikalischer oder chemischer Gaswäschen eingesetzt werden.

Im folgenden sei die Erfindung anhand eines in zwei Figuren schematisch dargestellten Ausführungsbeispiels näher erläutert.

Es zeigen:

Figur 1 Wasserdampfdestillation, wobei eine Wärmepumpe mit Hilfskreislauf angewendet wird, und

Figur 2 Regenerierung mittels Dampfstrahl-Brüdenverdichtung.

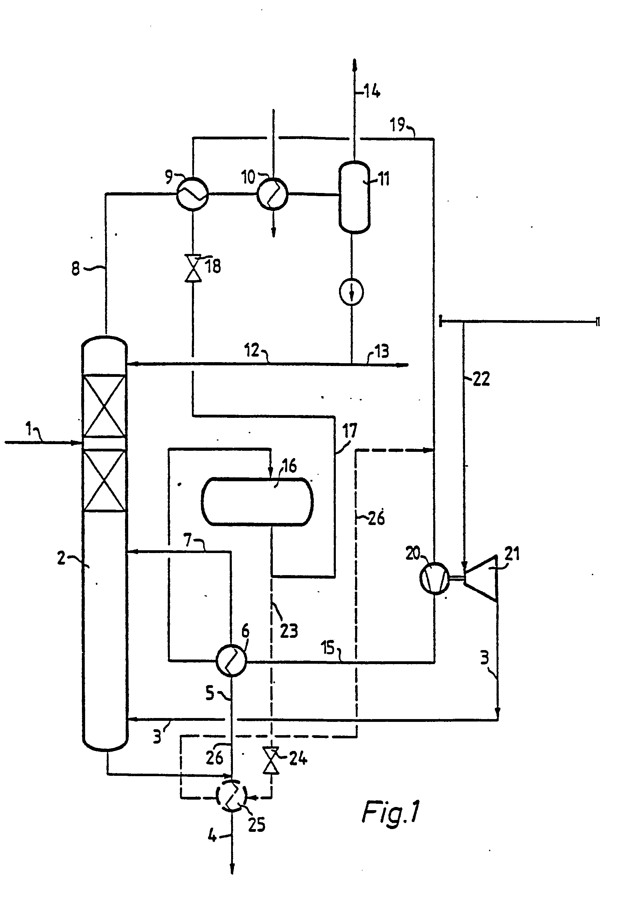

Gemäß Figur 1 wird über eine Leitung 1 einer Destillationskolonne 2 ein Einsatz zugeführt. Dieser Einsatz ist entweder ein mit absorbierten Verunreinigungen beladenes Lösungsmittel oder ein zu trennendes Stoffgemisch. In dem dargestellten Ausführungsbeispiel wird der Destillationskolonne im unteren Teil über eine Leitung 3 ein Teil des notwendigen Strippdampfes zugeführt, der im Gegenstrom aus dem Einsatz zu entfernende Stoffe abtrennt. Beispielsweise werden als Einsatz 900 t/h Tetraäthylenglykoldimethyläther aus einer Rauchgasentschwefelungsanlage, aus mit $SO_2$ beladen ist, mit einer Temperatur von 95°C zugeführt. Mittels des Strippdampfes (15 t/h, ca. 0,6 bar) wird aus dem Waschmittel das $SO_2$ abgestrippt. Das auf diese Weise von $SO_2$ befreite Waschmittel verläßt über Leitung 4 die Kolonne 2 mit einer Temperatur von 100°C und einem Druck von 0,6 bar.

Aus dem unteren Teil der Destillationskolonne wird ein Teilstrom der Flüssigkeit über Leitung 5 abgezogen, in einem Wärmetauscher 6 angewärmt, teilweise verdampft und über Leitung 7 wieder zurück zur Kolonne gegeben. Der dabei erzeugte Dampf trägt zur Verbesserung der Stripp-bzw. Rektifizierwirkung bei. Über Leitung 8 wird der mit $SO_2$ beladene Strippdampf abgezogen, in einem Wärmetauscher 9 gegen das Kreislaufmedium der Wärmepumpe auf ca. 65°C und gegen Kühlwasser in einem Kühler 10 auf ca. 30°C abgekühlt und einem Abscheider 11 zugeführt. Der kondensierte Strippdampf wird unten von dem Abscheider 11 über Rücklaufleitung 12 abgezogen und zum Teil auf dem Kopf der Destillationskolonne aufgegeben, um dort als Rücklauf zu dienen. Der andere Teil wird über Leitung 13 als Überschußwasser abgegeben. Vom oberen Teil des Abscheiders 11 wird über Leitung 14 das Kopfprodukt, d.h. das abgetrennte $SO_2$ in einer Menge von ca. 22,3 kmol/h abgezogen. Das $SO_2$ enthält dabei Wasserdampf entsprechend der Temperatur im Abscheider 11.

Die Sumpfheizung der Destillationskolonne wird im Wärmetauscher 6 durch Kreislaufmedium betrieben. Das Kreislaufmedium (45 kg/sec) wird dabei kondensiert und einem Sammler 16 mit einer Temperatur von 110°C zugeführt. Das Kondensat wird über Leitung 17 mit Entspannungsventil 18 durch den Wärmetauscher 9 geführt, dabei verdampft und dampfförmig über Leitung 19 einem Verdichter 20 zugeführt. Der auf 10,5 bar verdichtete Dampf wird über Leitung 15 wieder dem Wärmetauscher 6 zugeführt und erneut kondensiert. Der Verdichter 20 wird erfindungsgemäß von einer Dampfturbine 21 angetrieben, die ihrerseits mit Mitteldruckdampf (10 t/h, 30 bar, 300 K) aus Leitung 22 betrieben wird. Die Ausgangsseite der Turbine 21 ist mit dem Sumpf der Destillationskolonne über die Auspuffleitung 3 verbunden, so daß der Turbinenauspuff mit einer Temperatur von 86°C und einem Druck von 0,6 bar als Strippdampf in der Kolonne verwendet werden kann.

Bei konventionellen Verfahren, die mit Dampf heizen, werden im Vergleich zum erfindungsgemäßen Verfahren ca. 20 t/h Dampf zum Beheizen des Kolonnensumpfes benötigt, während beim erfindungsgemäßen Verfahren lediglich 10 t/h Dampf erforderlich sind.

Im dargestellten Ausführungsbeispiel ist gestrichelt überdies die Möglichkeit dargestellt, einen Teil des kondensierten Kreislaufmediums über Leitung 23 abzuzweigen, in einem Ventil 24 zu entspannen und nach Verdampfung im Wärmetauscher 25 über Leitung 26 in den Eintritt des Verdichters zu führen. Der Wärmetausch erfolgt dabei gegenüber Leitung 26 zugeführtes Sumpfprodukt. Diese Möglichkeit beitet den Vorteil, daß der Wärmeinhalt des Sumpfproduktes über die Wärmepumpe ebanfalls zur Beheizung der Kolonne ausgenutzt werden kann.

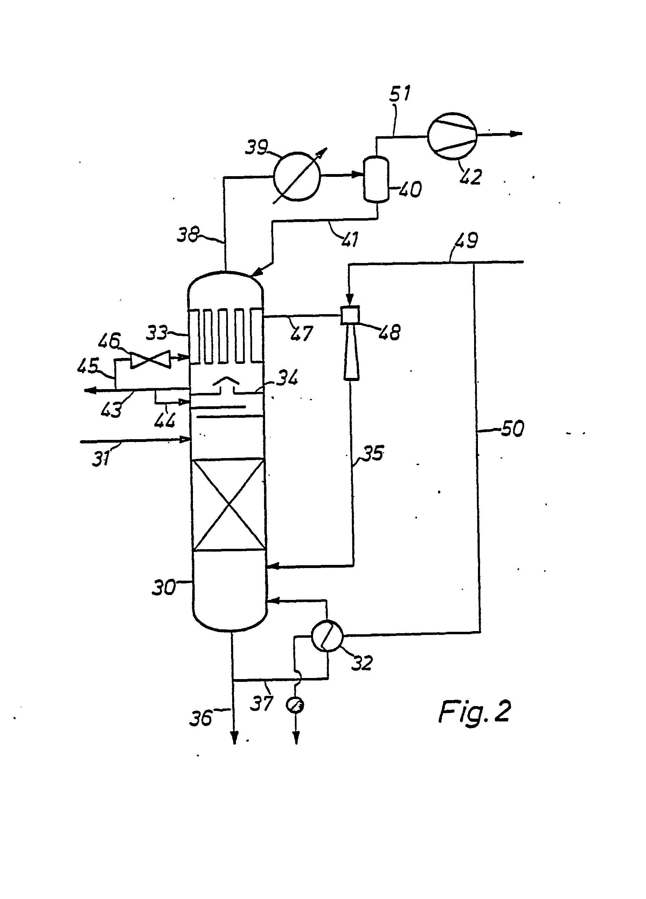

Gemäß Figur 2 werden über eine Leitung 31 einer Destillationskolonne 30 850 t/h eines mit Verunreinigungen beladenen physikalischen Lösungsmittels, z.B. mit $SO_2$ beladenes Tetraäthylenglykoldimethyläther, mit einer Temperatur von 95°C zugeführt. Die Destillationskolonne 30 ist mit einer Sumpfheizung 32 und Kopfkühlungen 33 und 39 ausgestattet. Die Kopfkühlung 33 ist dabei als Kondensatorverdampfer ausgebildet. Unterhalb der Kopfkühlung ist eine Flüssigkeitssperre 34, z.B. ein Kaminboden, angeordnet.

In dem dargestellten Ausführungsbeispiel werden der Destillationskolonne im unteren Teil über Leitung 35 8,5 t/h Dampf mit einer Temperatur von 115°C und einem Druck von 0,6 bar zugeführt. Im Sumpf der Säule herrscht eine Temperatur von 100°C bei 0,6 bar, so daß mittels des überhitzten Dampfes das $SO_2$ aus dem Lösungsmittel abgestrippt werden kann. Das auf diese Weise von $SO_2$ befreite Lösungsmittel verläßt die Kolonne über Leitung 36 mit einer Temperatur von 100°C und einem Druck von 0,6 bar. Ein Teilstrom des regenerierten Lösungsmittels wird über Leitung 37 in der Sumpfheizung 32 aufgekocht und zurück zur Kolonne geführt.

Der mit $SO_2$ beladene Wasserdampf wird in dem Kopfkühler 33 auf 84°C gekühlt, wobei ein Großteil des dampfes kondensiert, während über Kopf, Leitung 38 480 kmol/h einer aus 0,3 mol-%

CO$_2$ 4,2 mol-% SO$_2$ und 95,5 mol-% H$_2$O bestehenden gasförmigen Fraktion abgezogen werden. Diese Fraktion wird in einem Kühler 39 gegen Kühlwasser auf 30°C abgekühlt und einem Abscheider 40 zugeführt. Aus diesem werden 8,2 t/h Wasser über Leitung 41 auf den Kopf der Kolonne 30 geführt und über Leitung 51 20 kmol/h einer gasförmigen Fraktion bestehend aus 7,9 mol-% CO$_2$, 83,1 mol-% SO$_2$ und 9,0 mol-% H$_2$O abgezogen und nach Verdichtung in 42 abgegeben.

Das durch Abkühlung in dem Kopfkühler 33 entstandene Kondensat (ca. 9,4 t/h) wird über Leitung 43 oberhalb der Flüssigkeitssperre 34 aus der Kolonne abgezogen. Ein Teil davon (ca. 1t/h) wird über Leitung 44 als Rücklauf unterhalb der Flüssigkeitssperre 34 wieder auf die Kolonne aufgegeben, während ein weiterer Teil (ca.5t/h) über Leitung 45 nach Entspannung 46 zur Kühlung in den Kondensatorverdampfer 33 geleitet wird. Dabei verdampft das Kondensat und wird über Leitung 47 unter einem Druck von 0,42 bar mittels eines Ejektors 48 abgesaugt. Der Rest des abgezogenen Kondensates wird beispielsweise zur Speisewasseraufbereitung abgegeben.

In dem Dampfstrahler 48 wird der Dampf aus Leitung 47 auf 0,6 bar verdichtet und zusammen mit dem Arbeitsmedium—3,4 t/h Sattdampf aus Leitung 49—über Leitung 35 in den unteren Teil der Kolonne eingeführt. Ein Teil des Sattdampfes (10,5 t/h) wird unter einem Druck von 4,5 bar über Leitung 50 zum Aufkochen des Lösungsmittels in Wärmetauscher 32 verwendet.

## Patentansprüche

1. Verfahren zur Rektifikation und/oder Strippung in einer Kolonne, deren unterer Teil beheizt und deren oberer Teil gekühlt wird, wobei Heizung und Kühlung durch eine Wärmepumpe miteinander verkoppelt sind, dadurch gekennzeichnet, daß die Wärmepumpe durch arbeitsleistende Entspannung eines Gases oder Dampfes angetrieben wird und daß das Gas oder der Dampf nach der Entspannung als Strippgas in der Kolonne verwendet wird.

2. Verfahren nach Anspruch 1, dadurch gekennzeichnet, daß zum Antrieb der Wärmepumpe durch arbeitsleistende Entspannung Wasserdampf verwendet wird.

3. Verfahren nach Anspruch 1 oder 2, dadurch gekennzeichnet, daß die Wärmepumpe als geschlossenes System mit eigenem Arbeitsmedium betrieben wird.

4. Verfahren nach Anspruch 1 oder 2, dadurch gekennzeichnet, daß die Wärmepumpe als offenes System betrieben wird und daß als Arbeitsmedium das den Kolonnenkopf verlassende Gas verwendet wird.

5. Verfahren nach Anspruch 4, dadurch gekennzeichnet, daß ein Teil des in der Kopfkühlung kondensierten Dampfes abgezogen, entspannt und unter Verdampfung zur Kühlung des Kolonnenkopfes verwendet wird.

6. Verfahren nach Anspruch 5, dadurch gekennzeichnet, daß der aus dem Kolonnenkopf oder Kopfkondensator abgezogene Dampf in einem Ejektor komprimiert wird.

7. Verfahren nach einem der Ansprüche 1 bis 6, dadurch gekennzeichnet, daß der Wärmepumpe zusätzlich Wärme aus dem Sumpfprodukt zugeführt und dieses hierdurch abgekühlt wird.

8. Verfahren nach einem der Ansprüche 1 bis 7, dadurch gekennzeichnet, daß die Kühlung und/oder Heizung der Kolonne in mehreren Stufen durchgeführt wird.

9. Vorrichtung zur Durchführung des Verfahrens nach einem der Ansrpüche 1 bis 8 mit einer Kolonne (2; 30) mit Sumpfheizung und Kopfkühlung, die über eine Wärmepumpe (20; 48) miteinander gekoppelt sind, dadurch gekennzeichnet, daß die Wärmepumpe mit einer Entspannungseinrichtung (21; 48) verbunden ist und daß die Ausgangsseite der Entspannungseinrichtung mittels einer Leitung (3; 35) mit dem Sumpf der Kolonne verbunden ist.

10. Vorrichtung nach Anspruch 9, dadurch gekennzeichnet, daß die Wärmepumpe als geschlossenes System ausgebildet ist.

11. Vorrichtung nach Anspruch 9, dadurch gekennzeichnet, daß die Wärmepumpe als offenes System ausgebildet und über eine Leitung (47) mit dem Kopf der Kolonne oder einem Kopfkondensator (133) verbunden ist.

12. Vorrichtung nach Anspruch 10 der 11, dadurch gekennzeichnet, daß die Entspannungsvorrichtung als Expansionsturbine (21) ausgebildet und über eine Auspuffleitung (3) an den unteren Teil der Kolonne angeschlossen ist.

13. Vorrichtung nach Anspruch 11, dadurch gekennzeichnet, daß die Entspannungsvorrichtung als Ejektor (48) ausgebildet ist.

14. Vorrichtung nach einem der Ansprüche 9 bis 13, dadurch gekennzeichnet, daß unterhalb der Kopfkühlung die Kolonne mit einer Flüssigkeitssperre (34) versehen ist.

15. Vorrichtung nach einem der Ansprüche 9, 10 oder 12, dadurch gekennzeichnet, daß die Wärmepumpe zusätzlich mit der Produktleitung (4) für das Produkt verbunden ist.

## Revendications

1. Procédé de rectification et/ou d'entraînement dans une colonne dont la partie inférieure est chauffée et dont la partie supérieure est refroidie, le chauffage et le refroidissement étant associées par l'intermédiaire d'une pompe à chaleur, caractérisé par le fait que la pompe à chaleur fonctionne par détente d'un gaz ou d'une vapeur libérant de l'énergie et que le gaz ou la vapeur est utilisé après la détente pour l'entraînement dans la colonne.

2. Procédé selon la revendication 1, caractérisé par le fait que pour la pompe à chaleur fonctionne par détente, libérant de l'énergie, de vapeur d'eau.

3. Procédé selon la revendication 1 ou 2, caractérisé par le fait que la pompe à chaleur fonctionne en tant que système fermé dans lequel circule un fluide de travail qui lui est propre.

4. Procédé selon la revendication 1 ou 2, caractérisé par le fait que la pompe à chaleur fonctionne en tant que système ouvert et que l'on utilise comme fluide de travail le gaz qui s'échappe en tête de la colonne.

5. Procédé selon la revendication 4, caractérisé par le fait qu'une partie de la vapeur condensée au cours du refroidissement de tête est soutirée, détendue et vaporisée pour assurer le refroidissement de la tête de colonne.

6. Procédé selon la revendication 5, caractérisé par le fait que la vapeur soutirée de la tête de colonne ou du condenseur de tête est comprimée dans un éjecteur.

7. Procédé selon une des revendications 1 à 6, caractérisé par le fait que de la chaleur supplémentaire est apportée à la pompe à chaleur par le produit de cuve et que celui-ci se trouve refroidi de ce fait.

8. Procédé selon une des revendications 1 à 7, caractérisé par le fait que le refroidissement et/ou le chauffage de la colonne sont exécutés en plusieurs étages.

9. Installation destinée à la mise en oeuvre du procédé selon une des revendications 1 à 8, comportant une colonne (2; 30) comportant un chauffage de cuve et un refroidissement de tête, qui sont associés entre eux par l'intermédiaire d'une pompe à chaleur (20; 48), caractérisé par le fait que la pompe à chaleur est reliée à un dispositif de détente (21; 48) et que la sortie du dispositif de détente est reliée au moyen d'un conduit (3; 35) au fond de la colonne.

10. Installation selon la revendication 9, caractérisé par le fait que la pompe à chaleur est sous forme de système fermé.

11. Installation selon la revendication 9, caractérisé par le fait que la pompe à chaleur est sous forme de système ouvert et est reliée à la tête de la colonne ou à un condenseur (33) de tête par l'intermédiaire d'un conduit (47).

12. Installation selon la revendication 11, caractérisée par le fait que le dispositif de détente est sous forme d'une turbine d'expansion (21) et est raccordé à la partie inférieure de la colonne par l'intermédiaire d'un conduit d'échappement (3).

13. Installation selon la revendication 11, caractérisée par le fait que le dispositif de détente est sous forme d'éjecteur (48).

14. Installation selon une des revendications 9 à 13, caractérisée par le fait que la colonne endessous du dispositif de refroidissement de la tête est munie d'un dispositif d'arrêt (34) pour liquides.

15. Installation selon une des revendications 9, 10 ou 12, caractérisée par le fait que la pompe à chaleur est en outre reliée au conduit (4) d'amenée du produit.

**Claims**

1. A process for rectification and/or stripping in a column, the lower part of which is heated and the upper part of which is cooled, where the heating stage and cooling stage are coupled to one another by a heat pump, characterised in that the heat pump is operated by the work-producing expansion of a gas or vapour and that the gas or vapour is used as stripping gas in the column following the expansion.

2. A process as claimed in Claim 1, characterised in that water vapour is used to drive the heat pump by work-producing expansion.

3. A process as claimed in Claim 1 or Claim 2, characterised in that the heat pump is operated as a closed system which its own operating medium.

4. A process as claimed in Claim 1 or Claim 2, characterised in that the heat pump is operated as an open system and that the gas discharged from the column head is used as operating medium.

5. A process as claimed in Claim 4, characterised in that a part of the vapour which has condensed in the head cooling stage is discharged, expanded and is used to cool the column head while being vaporised.

6. A process as claimed in Claim 5, characterised in that the vapour discharged from the column head or the head condenser is compressed in an ejector.

7. A process as claimed in one of the Claims 1 to 6, characterised in that the heat pump is additionally supplied with heat from the sump product and the sump product is thereby cooled.

8. A process as claimed in one of the Claims 1 to 7, characterised in that the cooling and/or heating of the column is carried out in a plurality of steps.

9. A device for executing the process claimed in one of the Claims 1 to 8 comprising a column (2; 30) with a sump heating stage and a head cooling stage which are coupled to one another via a heat pump (20; 48), characterised in that the heat pump is connected to an expansion device (21; 48) and that the output end of the expansion device is connected to the sump of the column by a line (3; 35).

10. A device as claimed in Claim 9, characterised in that the heat pump is designed as a closed system.

11. A device as claimed in Claim 9, characterised in that the heat pump is designed as an open system and is connected via a line (47) to the head of the column or to a head condenser (33).

12. A device as claimed in Claim 10 or Claim 11, characterised in that the expansion device is designed as an expansion turbine (21) and is connected via an exhaust line (3) to the lower part of the column.

13. A device as claimed in Claim 11, characterised in that the expansion device is designed as an ejector (48).

14. A device as claimed in one of the Claims 9 to 13, characterised in that the column is provided with a fluid barrier (34) below the head cooling stage.

15. A device as claimed in one of the Claims 9, 10 or 12, characterised in that the heat pump is additionally connected to the product line (4) for the product.

EP 0 155 578 B1

Fig.1

EP  0 155 578  B1

Fig. 2